# FASCICULE DE BREVET EUROPEEN

(11) **EP 0 588 684 B1**
(45) Date de publication et mention de la délivrance du brevet: **27.12.1996**
(21) Numéro de dépôt: 93402162.7
(22) Date de dépôt: 06.09.1993
(51) Int. Cl.: F16F 15/00, B64D 47/08

(54) **Dispositif de suspension pour relier un équipement embarqué à la structure d'un véhicule**
Aufhängungssystem zum Tragen von Ausrüstung an einem Fahrzeugaufbau
Suspension device to connect equipment to a vehicle structure

(30) Priorité: 17.09.1992 FR 9211094
(43) Date de publication de la demande: 23.03.1994
(73) Titulaire: AEROSPATIALE SOCIETE NATIONALE INDUSTRIELLE, 75016 Paris (FR)
(72) Inventeur: Marchand, Roger, F-78470 St Remy Les Chevreuse (FR); Florentin, Yves, F-78180 Montigny le Bretonneux (FR); Chicot, Serge, F-78410 Aubergenville (FR)
(74) Mandataire: Bonnetat, Christian

(56) Documents cités:
- DE-U- 7 306 822
- FR-A- 2 202 576
- FR-A- 2 451 511
- GB-A- 802 410
- US-A- 2 312 718
- US-A- 2 704 196
- US-A- 2 867 405
- US-A- 3 204 911
- US-A- 3 625 466

## Description

La présente invention concerne un dispositif de suspension pour relier, à la structure d'un véhicule, un équipement embarqué conforme au préambule de la revendication 1. Un tel dispositif est connu du US-A-3 625 466.

Quoique non exclusivement, le dispositif de suspension selon l'invention est plus particulièrement destiné à être disposé entre la structure d'un aéronef à voilure tournante, tel qu'un hélicoptère, et un appareil de visée.

On sait que les équipements, héliportés dans cette application préférentielle, sont soumis à d'importants phénomènes vibratoires dus notamment aux rotors respectivement principal et arrière, à leurs pales, à la transmission, au moteur, etc..., ainsi qu'aux facteurs de charge variables de l'hélicoptère dus à ces trajectoires et auxquels est soumis ledit équipement embarqué.

Aussi, lorsque l'équipement est un appareil de visée du type jour/nuit, monté sur la structure de l'hélicoptère, l'influence de ces diverses sollicitations est préjudiciable à l'efficacité de l'appareil de visée. Cela se traduit bien souvent par une dégradation de la stabilisation par action directe des vibrations notamment sur le gyroscope et les supports des ensembles optiques, par une dégradation du confort, puisque les vibrations sont alors transmises de l'appui-front du casque à la tête de l'opérateur, et par une diminution de la fiabilité même de l'appareil, puisque les capteurs optroniques et le viseur sont soumis à des vibrations permanentes. De plus, les facteurs de charges correspondant aux accélérations de l'hélicoptère se répercutent directement sur l'équipement.

La présente invention a pour but de pallier les inconvénients rencontrés dans cette application spécifique nuisant aux performances de l'équipement embarqué, et concerne un dispositif de suspension permettant notamment d'agir sur les effets des phénomènes vibratoires et des facteurs de charge susceptibles d'affecter l'équipement suspendu.

A cet effet, selon l'invention, on prevoit un dispositif de suspension comportant toutes les caractéristique de la revendication 1.

Ainsi, le dispositif de suspension selon l'invention permet de prendre en compte aussi bien les déplacements en translation sur les trois axes de référence de l'aéronef que les débattements angulaires autour de ces axes, qui sont produits par les vibrations et les facteurs de charge. Le dispositif constitue par conséquent une suspension "six axes" (trois en translation et trois en rotation) et il forme de plus, grâce aux éléments plats auxquels sont liés les moyens de suspension, une interface ou un module qui peut être, de ce fait, aisément adaptable à tout type d'aéronef, tel que les hélicoptères, et un quelconque équipement à embarquer, sans avoir à recourir à d'importantes modifications de structure sur l'aéronef.

Lesdits premier et second éléments conformés en plaques sont alors disposés parallèlement l'un par rapport à l'autre, dans un plan formé par les axes de roulis et de tangage dudit aéronef. Avantageusement, lesdits premier et second éléments, entre lesquels sont prévus lesdits organes amortisseurs et lesdits organes de suspension élastiques, sont réunis entre eux latéralement par l'intermédiaire d'un joint souple périphérique, et, sur les faces externes desdits premier et second éléments sont prévus des joints assurant, par l'intermédiaire de moyens de fixation, une liaison étanche entre lesdites faces externes des éléments et, respectivement, la structure dudit aéronef et ledit équipement. On réalise ainsi un module de suspension totalement étanche vis-à-vis des moyens de suspension, garantissant une protection maximale et une longévité accrue.

Dans un mode préféré de réalisation, lesdits organes amortisseurs sont conformés en une pluralité de boucles fermées, contenues dans des plans orthogonaux au plan défini par lesdits axes de roulis et de tangage et disposées de façon équi-angulairement répartie les unes par rapport aux autres autour de l'axe de lacet dudit aéronef. Plus particulièrement, lesdites boucles présentent une forme oblongue, dont le grand axe est incliné sensiblement à 45° par rapport au plan desdits éléments, de façon à converger en direction de la structure dudit aéronef. Grâce à cet agencement des boucles oblongues, les déplacements en translation le long des trois axes orthogonaux, dus aux vibrations et autres facteurs de charge, sont pris en compte permettant de stabiliser rapidement la plaque suspendue et, donc, l'équipement par rapport à la plaque fixe solidaire de la structure de l'hélicoptère.

Lesdites boucles, définissant lesdits organes amortisseurs, sont de préférence réalisées en une matière métallique, sous forme de câbles. Afin d'absorber la moindre sollicitation, lesdites boucles sont avantageusement proches de la périphérie desdits éléments sous forme de plaques, et chaque boucle est fixée respectivement auxdites plaques par des boulons disposés sensiblement selon le petit axe de ladite boucle oblongue.

Par ailleurs, lesdits organes de suspension élastiques comprennent avantageusement des barres de torsion, respectivement disposées de façon à empêcher les débattements angulaires autour des trois axes de référence dudit aéronef. Plus particulièrement, trois barres de torsion anti-roulis, anti-tangage et anti-lacet sont prévues pour agir respectivement autour des trois axes de référence, lesdites barres de torsion étant contenues sensiblement dans un même plan parallèle à celui formé par les axes de roulis et de tangage dudit aéronef et étant disposées chacune orthogonalement et à équidistance de l'axe de référence correspondant dudit aéronef. Dans un mode préféré de réalisation, chacune desdites barres de torsion est liée, d'une part, audit élément fixé à la structure de l'aéronef, au moyen de paliers dans lesquels sont logées les extrémités de la barre, et, d'autre part, audit élément suspendu portant ledit équipement, au moyen de deux jeux de deux biellettes articulées, dont les unes sont associées au voisinage des extrémités de chaque barre selon une direction parallèle audit axe de référence correspondant, et dont les autres biellettes sont articulées à des chapes fixées audit élément suspendu, selon une direction perpendiculaire.

L'ensemble de ces barres de torsion permet ainsi de prendre en compte les rotations susceptibles d'apparaître autour des axes de référence dudit aéronef lors des phénomènes vibratoires et des facteurs de charge, et pouvant entraîner des déplacements néfastes de l'élément suspendu portant l'équipement par rapport à l'élément fixe du dispositif, solidaire de la structure de l'hélicoptère.

Les figures du dessin annexé feront bien comprendre comment l'invention peut être réalisée. Sur ces figures, des références identiques désignent des éléments semblables.

La figure 1 représente un hélicoptère auquel est associé un équipement de visée par l'intermédiaire d'un dispositif de suspension conforme à l'invention.

La figure 2 est une vue de dessus dudit dispositif illustré sur la figure 1.

La figure 3 montre une coupe dudit dispositif de suspension selon la ligne III-III de la figure 2.

La figure 4 est une coupe selon la ligne IV-IV de la figure 2 montrant l'un des organes amortisseurs des moyens de suspension.

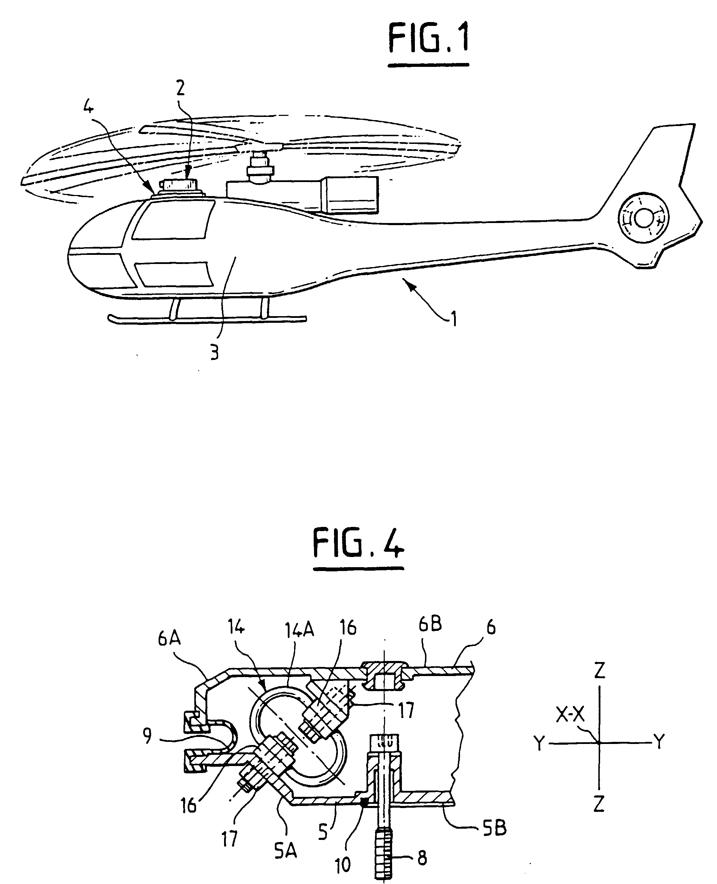

Comme le montre la figure 1, l'hélicoptère représenté 1 est pourvu d'un équipement embarqué 2, qui est relié à la structure 3 dudit hélicoptère par l'intermédiaire d'un dispositif de suspension 4 conforme à l'invention, permettant d'absorber les vibrations et mouvements rencontrés sur ce type d'aéronef à voilure tournante. A titre d'exemple, l'équipement 2 peut être un appareil de visée, de sorte qu'il est primordial, pour les raisons évoquées préalablement d'annihiler les effets des fréquences parasites et autres facteurs de charge auxquels l'équipement est soumis, afin que la liaison appareil de visée-pilote s'effectue dans les meilleures conditions possibles.

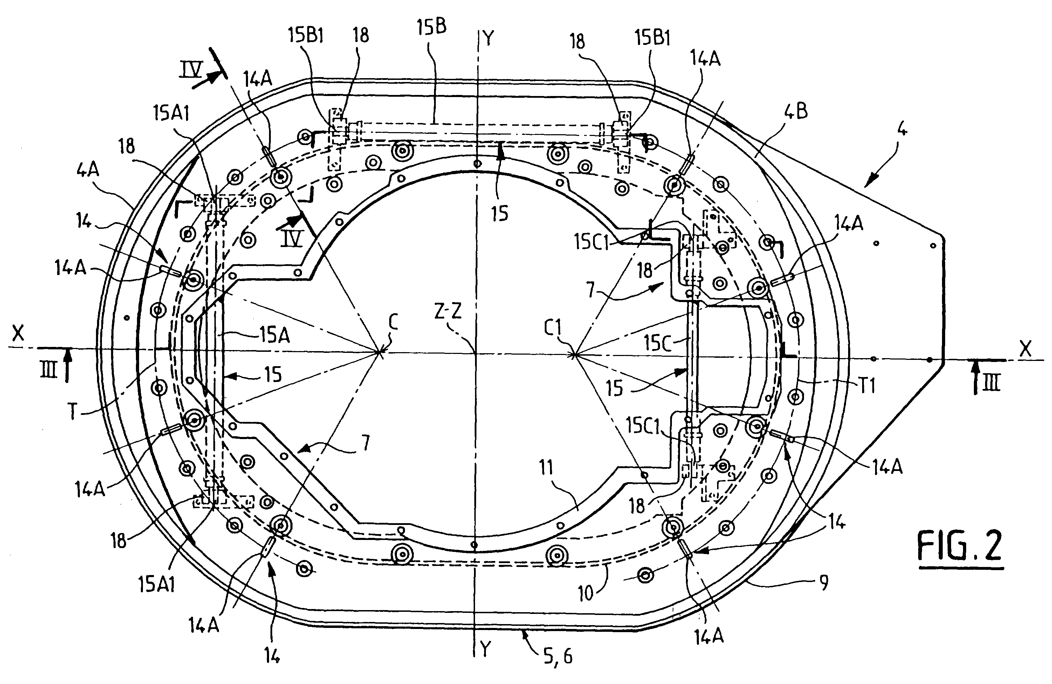

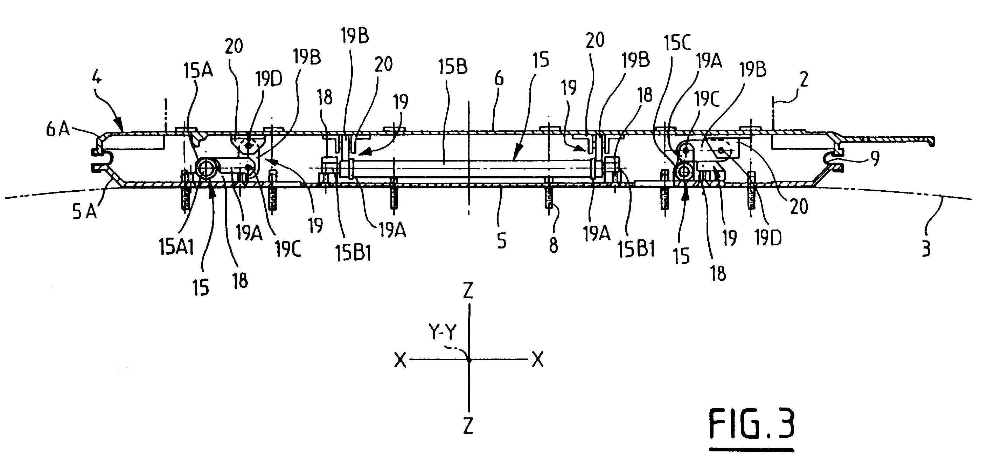

Le dispositif de suspension 4 se présente sous la forme d'un module comprenant deux éléments 5 et 6 qui sont définis, dans ce mode de réalisation, par des plaques et entre lesquels sont disposés des moyens de suspension 7. Plus particulièrement, les plaques 5 et 6 du dispositif de suspension 4 sont parallèlement espacées l'une de l'autre et, par rapport aux axes de roulis X-X, de tangage Y-Y et de lacet Z-Z du repère orthonormé de référence dudit hélicoptère, elles sont contenues dans des plans parallèles au plan formé par les axes de roulis X-X et de tangage Y-Y dudit repère, comme le montrent les figures 2 et 3. Ces deux plaques 5 et 6 sont liées respectivement à la structure 3 de l'hélicoptère et à l'équipement 2. Par exemple, la première plaque 5, alors inférieure, est fixée à la structure 3 par des boulons 8, tandis que la seconde plaque 6, supérieure, porte l'équipement 2 par des moyens de fixation non représentés, mais connus en soi. Ainsi, la seconde plaque supérieure 6, recevant l'équipement, est suspendue par rapport à la première plaque inférieure, fixée à la structure de l'hélicoptère, par l'intermédiaire des moyens de suspension 7.

On remarque par ailleurs sur les figures 2 à 4, que les deux plaques 5 et 6, dont la forme extérieure décrite est dans cet exemple oblongue, sont légèrement recourbées l'une vers l'autre à leurs extrémités périphériques 5A et 6A, et un joint souple élastique 9 assure la liaison étanche entre lesdites extrémités recourbées 5A, 6A. En outre, des joints de forme 10 et 11 assurent également l'étanchéité respective entre la structure 3 et la face externe 5B de la première plaque 5, et entre l'équipement 2 et la face externe 6B de la seconde plaque.

Les moyens de suspension 7 du dispositif, prévus entre les deux plaques 5 et 6, comprennent avantageusement des organes amortisseurs 14 destinés à agir selon les trois axes de référence X-X, Y-Y et Z-Z afin d'absorber les déplacements linéaires de l'ensemble suspendu "plaque supérieure 6-équipement 2" le long desdits axes, et des organes de suspension élastiques 15 destinés à agir autour des trois axes de référence X-X, Y-Y et Z-Z afin d'absorber les débattements angulaires dudit ensemble suspendu autour desdits axes.

Plus particulièrement, les organes amortisseurs 14 montrés sur les figures 3 et 4 sont constitués par une pluralité de boucles fermées identiques 14A qui ont, dans cet exemple de réalisation, une configuration oblongue et qui sont toutes contenues dans des plans orthogonaux au plan formé par les axes de roulis X-X et de tangage Y-Y, correspondant à la plaque 5 fixe par rapport à la structure 3 de l'hélicoptère. Ces boucles fermées 14A sont au nombre de huit, par exemple, et elles sont équi-angulairement réparties les unes par rapport aux autres en formant par conséquent entre elles un angle de 45°. Structurellement, lesdites boucles 14A sont réalisées en une matière métallique, sous forme de câbles, assurant ainsi une bonne élasticité et un fort amortissement.

On voit notamment sur la figure 2 que, puisque les plaques 5 et 6 du dispositif présentent une configuration oblongue, quatre des huit boucles fermées métalliques 14A sont espacées régulièrement sur une même trajectoire demi-circulaire T de centre C correspondant à celui de la partie circulaire avant 4A du dispositif 4 par rapport au sens de déplacement de l'hélicoptère 1, tandis que les quatre autres boucles 14A sont également agencées sur une même trajectoire demi-circulaire T1 de centre C1 correspondant à celui de la partie circulaire alors arrière 4B du dispositif oblong. Bien évidemment, les rayons des trajectoires T et T1 sont identiques et les centres C et C1 sont alignés le long de l'axe de roulis X-X. Par ailleurs, les trajectoires T et T1, sur lesquelles sont situées perpendiculairement les boucles 14A, sont proches des extrémités recourbées 5A et 6A des plaques, afin d'être le plus éloigné les unes des autres et, ainsi, absorber rapidement les moindres mouvements le long des trois axes.

En outre, comme le montre la figure 4, le grand axe de chacune des boucles fermées oblongues 14A, disposées orthogonalement au plan formé par les axes X-X et Y-Y, est incliné à 45° par rapport à ce dernier, de façon que l'ensemble des grands axes des quatre boucles situées sur la même trajectoire converge respectivement en un même point, situé sur un axe contenant le centre C ou C1 et parallèle à l'axe de lacet Z-Z. Chaque boucle 14A est alors montée sur les plaques 5 et 6 par l'intermédiaire de supports spécifiques 16 et de boulons 17 dirigés selon le petit axe des boucles oblongues, perpendiculairement au grand axe. On voit sur la figure 4, que les deux boulons 17, fixant respectivement les deux brins de la boucle engagés dans leurs supports 16 aux plaques 5 et 6, sont légèrement décalés parallèlement l'un par rapport à l'autre montrant ainsi la position sous charge.

L'agencement des amortisseurs à boucles métalliques oblongues, réparties sur le pourtour du dispositif de suspension 4, permet d'agir de façon optimale et dès la moindre sollicitation néfaste (vibrations, facteurs de charge) en translation le long des axes et, donc, d'absorber rapidement les déplacements de la plaque suspendue, à laquelle est lié l'équipement, par rapport à la plaque fixe, solidaire de la structure de l'hélicoptère.

Les organes de suspension élastiques 15 desdits moyens de suspension 7 sont définis par des barres de torsion dont le but est d'empêcher les débattements angulaires autour des trois axes de référence X-X, Y-Y et Z-Z de l'hélicoptère. Pour cela, trois barres de torsion dénommées alors anti-roulis 15A, anti-tangage 15B et anti-lacet 15C sont prévues pour agir autour des axes correspondants respectivement de roulis X-X, de tangage Y-Y et de lacet Z-Z de l'hélicoptère, et absorber ainsi les rotations angulaires.

Comme le montre la figure 3, ces trois barres de torsion 15A, 15B et 15C, approximativement identiques entre elles, sont disposées sensiblement dans un même plan qui est parallèle au plan formé par les axes de roulis X-X et de tangage Y-Y, c'est-à-dire parallèlement aux plaques 5 et 6, et elles sont liées, par un montage structurellement analogue, à la plaque fixe 5 solidaire de la structure 3 de l'hélicoptère et à la plaque suspendue 6 portant l'équipement embarqué 2.

Ainsi, on voit sur les figures 2 et 3, que la barre de torsion anti-roulis 15A est, par exemple, située en partie avant 4A du dispositif, en étant disposée, par conséquent, orthogonalement et avantageusement de façon équidistante à l'axe de roulis X-X. Les extrémités 15A1 de la barre sont logées dans des paliers à rotule 18 fixés à la plaque inférieure 5 qui est solidaire de la structure 3 de l'hélicoptère. Deux jeux identiques 19 de deux biellettes chacun 19A et 19B, articulées entre elles autour d'axes respectifs 19C parallèles à la barre 15A, relient cette dernière à la plaque suspendue 6. Plus particulièrement, les biellettes 19A sont montées autour de la barre de torsion 15A, au voisinage des extrémités respectives 15A1 engagées dans lesdits paliers, tandis que les biellettes 19B sont montées, par l'intermédiaire d'axes d'articulation respectifs 19D, parallèles aux axes 19C, dans des chapes 20 fixées à la plaque suspendue. Par ailleurs, la direction des biellettes 19A est parallèle à l'axe de roulis X-X, tandis que la direction des biellettes 19B est, quant à elle, parallèle à l'axe de lacet Z-Z, de sorte que les biellettes 19A et 19B forment entre elles un coude, à angle droit.

On comprend donc que, par l'agencement de cette barre de torsion 15A et des deux jeux de biellettes 19A, 19B, le débattement angulaire autour de l'axe de roulis X-X, de la plaque suspendue portant l'équipement par rapport à la plaque fixe solidaire de l'hélicoptère, est empêché et absorbé par la barre de torsion 15A.

De façon semblable, la barre de torsion anti-tangage 15B est par exemple décalée parallèlement par rapport à l'axe de roulis X-X, pour être disposée orthogonalement et respectivement de part et d'autre de l'axe de tangage Y-Y. Les extrémités 15B1 de cette barre de torsion 15B sont portées par des paliers à rotule 18 fixés, comme les précédents, à la plaque inférieure 5, et deux jeux identiques 19 de deux biellettes chacun 19A, 19B, analogues aux précédents, sont prévus. Aussi, les deux biellettes 19A, proches des extrémités respectives 15B1 de la barre, sont alors dirigées parallèlement à l'axe de tangage Y-Y, tandis que les deux autres biellettes 19B sont parallèles à l'axe de lacet Z-Z, ces dernières étant reliées, par des axes d'articulation 19D, à la plaque supérieure suspendue 6 au moyen de chapes 20. Par conséquent, un déplacement en translation selon l'axe Y-Y des biellettes est susceptible de se traduire par une torsion élastique de la barre 15B1 autour de son axe, reprenant le débattement angulaire selon l'axe de tangage Y-Y.

Enfin la barre de torsion 15C anti-lacet est située en partie arrière 4B du dispositif, en étant disposée orthogonalement et de façon équidistante dudit axe de lacet Z-Z. Les extrémités 15C1 de cette barre sont logées dans des paliers à rotule 18 qui sont fixés à la plaque inférieure 5 du dispositif. Deux jeux 19 de biellettes 19A et 19B, identiques aux précédents assurent la liaison de la barre à la plaque supérieure 6. Plus particulièrement, la direction des biellettes 19A, qui sont liées à la barre de torsion 15C au voisinage de ses extrémités 15C1, est parallèle à l'axe de lacet Z-Z, tandis que la direction des biellettes 19B, articulées aux biellettes 19A par des axes 19C, est parallèle à l'axe de roulis X-X. Un déplacement en translation selon l'axe X-X,suivant les biellettes 19B, soit possible et il se traduit, par les biellettes 19A, par une torsion élastique de la barre 15C, de sorte que le débattement angulaire autour de l'axe de lacet Z-Z est empêché.

On comprend donc que, quelles que soient les diverses sollicitations produites (vibrations, facteurs de charge, etc...), le dispositif de suspension 4 selon l'invention permet de les atténuer grâce aux organes amortisseurs 14 à boucles métalliques prenant en compte les translations le long des trois axes, et aux barres de torsion 15 s'opposant aux rotations autour desdits axes, de façon à stabiliser au mieux l'équipement embarqué lié à la plaque suspendue par rapport à la structure de l'hélicoptère. Ainsi, la stabilisation d'image de l'équipement de visée, le confort visuel de l'opérateur et la fiabilité de l'équipement sont améliorés, grâce aux moyens de suspension du dispositif, qui agissent notamment sur les spectres vibratoires souhaités. En outre, la réalisation du dispositif sous forme de module lui permet de recevoir divers types d'équipement, et d'être adaptable à tout type d'hélicoptères sans recourir à des modifications importantes.

## Revendications

1. Dispositif de suspension pour relier un équipement embarqué à la structure d'un véhicule, tel qu'un aéronef à voilure tournante, du type comportant des premier et second éléments susceptibles d'être fixés respectivement à ladite structure et audit équipement, et des moyens de suspension disposés entre lesdits éléments et susceptibles d'agir selon les trois axes de référence de roulis, de tangage, et de lacet dudit aéronef pour absorber les déplacements linéaires le long desdits axes, ainsi que d'agir autour des trois axes de référence pour absorber les débattements angulaires,
caractérisé en ce que :
- lesdits premier (5) et second (6) éléments sont conformés au moins approximativement en plaques disposées parallèlement l'une par rapport à l'autre, dans un plan formé par les axes de roulis et de tangage dudit aéronef, et formant avec lesdits moyens de suspension (7), un module ; et
- lesdits moyens de suspension (7) comportent des organes amortisseurs (14), chacun lié aux premier et second éléments et susceptible d'absorber les déplacements linéaires le long desdits axes, et des organes de suspension élastiques (15) séparés des organes amortisseurs (14) et liés respectivement aux premier et second éléments et susceptibles d'absorber les débattements angulaires.

2. Dispositif selon la revendication 1,
caractérisé en ce que lesdits premier et second éléments (5,6), entre lesquels sont prévus lesdits organes amortisseurs (14) et lesdits organes de suspension élastiques (15), sont réunis entre eux latéralement par l'intermédiaire d'un joint souple périphérique (9), et en ce que, sur les faces externes (5B,6B) desdits premier et second éléments, sont prévus des joints (10,11) assurant, par l'intermédiaire de moyens de fixation, une liaison étanche entre lesdites faces externes des éléments et, respectivement, la structure (3) dudit aéronef et ledit équipement (2).

3. Dispositif selon l'une des revendications 1 ou 2,
caractérisé en ce que lesdits organes amortisseurs (14) sont conformés en une pluralité de boucles fermées (14A), contenues dans des plans orthogonaux au plan défini par lesdits axes de roulis et de tangage et disposées de façon équi-angulairement répartie les unes par rapport aux autres autour de l'axe de lacet dudit aéronef.

4. Dispositif selon la revendication 3,
caractérisé en ce que lesdites boucles (14A) présentent une forme oblongue, dont le grand axe est incliné sensiblement à 45° par rapport au plan desdits éléments, de façon à converger en direction de la structure dudit aéronef.

5. Dispositif selon l'une des revendications 3 ou 4,
caractérisé en ce que lesdites boucles (14A), définissant lesdits organes amortisseurs, sont réalisées en une matière métallique, sous forme de câbles.

6. Dispositif selon l'une quelconque des revendications 4 ou 5,
caractérisé en ce que lesdites boucles (14A) sont proches de la périphérie (5A,6A) desdits éléments sous forme de plaques, et en ce que chaque boucle (14A) est fixée respectivement auxdites plaques (5,6) par des boulons (17) disposés sensiblement selon le petit axe de ladite boucle oblongue.

7. Dispositif selon l'une quelconque des revendications précédentes 1 à 6,
caractérisé en ce que lesdits organes de suspension élastiques (15) comprennent des barres de torsion (15A,15B,15C) respectivement disposées de façon à empêcher les débattements angulaires autour des trois axes de référence dudit aéronef.

8. Dispositif selon la revendication 7,
caractérisé en ce que trois barres de torsion anti-roulis (15A), anti-tangage (15B) et anti-lacet (15C) sont prévues pour agir respectivement autour des trois axes de référence, lesdites barres de torsion étant contenues sensiblement dans un même plan parallèle à celui formé par les axes de roulis et de tangage dudit aéronef et étant disposées chacune orthogonalement et à équidistance de l'axe de référence correspondant dudit aéronef.

9. Dispositif selon l'une des revendications 7 ou 8,
caractérisé en ce que chacune desdites barres de torsion (15A,15B,15C) est liée, d'une part, audit élément (5) fixé à la structure (3) de l'aéronef, au moyen de paliers (18) dans lesquels sont logées les extrémités de la barre, et, d'autre part, audit élément suspendu (6) portant ledit équipement (2), au moyen de deux jeux (19) de deux biellettes articulées, dont les unes (19A) sont associées au voisinage des extrémités de chaque barre selon une direction parallèle audit axe de référence correspondant, et dont les autres biellettes (19B) sont articulées à des chapes (20) fixées audit élément suspendu (6), selon une direction perpendiculaire.

## Patentansprüche

1. Aufhängungssystem zur Verbindung einer Bordausrüstung mit der Struktur eines Fahrzeugs, zum Beispiel eines Drehflüglers, der Art, daß es ein erstes und ein zweites Element, die jeweils an der Struktur und an der Ausrüstung befestigt sein können, und Aufhängungsmittel umfaßt, die zwischen den Elementen angebracht sind und nach den drei Bezugsachsen, der Längs-, Quer- und Hochachse, des Luftfahrzeugs wirken und die linearen Bewegungen längs der Achsen dämpfen sowie um die drei Bezugsachsen herum wirken können, um deren Winkelausschläge zu dämpfen,
dadurch gekennzeichnet, daß:
- das erste (5) und zweite (6) Element mindestens annähernd die Form von Platten haben, die parallel zueinander in einer aus der Längs- und Querachse des Luftfahrzeugs gebildeten Ebene angeordnet sind und mit den Aufhängungsmitteln (7) einen Modul bilden und
- die Aufhängungsmittel (7) Dämpfungsorgane (14), die jeweils mit dem ersten und zweiten Element verbunden sind und die linearen Bewegungen längs der Achsen dämpfen können, und elastische Aufhängungsorgane (15) haben, die von den Dämpfungsorganen (14) getrennt und jeweils mit dem ersten und zweiten Element verbunden sind und die Winkelausschläge dämpfen können.

2. System nach Anspruch 1,
dadurch gekennzeichnet, daß das erste und zweite Element (5,6), zwischen denen die Dämpfungsorgane (14) und die elastischen Aufhängungsorgane (15) vorgesehen sind, seitlich miteinander durch eine flexible Umfangsdichtung (9) verbunden sind, und dadurch, daß an den Außenseiten (5B,6B) des ersten und zweiten Elements Dichtungen (10,11) vorgesehen sind, die über Befestigungsmittel eine dichte Verbindung zwischen den Außenflächen der Elemente und der Struktur (3) des Luftfahrzeugs bzw. der Ausrüstung (2) gewährleisten.

3. System nach einem der Ansprüche 1 oder 2,
dadurch gekennzeichnet, daß die Dämpfungsorgane (14) die Form einer Vielzahl geschlossener Schleifen (14A) haben, die in Ebenen rechtwinklig zu der von der Längs- und Querachse gebildeten Ebene enthalten und gleichwinklig zueinander um die Hochachse des Luftfahrzeugs herum angeordnet sind.

4. System nach Anspruch 3,
dadurch gekennzeichnet, daß die Schleifen (14A) eine längliche Form haben, deren große Achse eine Neigung von etwa 45° gegenüber der Ebene der Elemente aufweist, so daß diese in Richtung der Struktur des Luftfahrzeugs konvergieren.

5. System nach einem der Ansprüche 3 oder 4,
dadurch gekennzeichnet, daß die Schleifen (14A), die die Dämpfungsorgane darstellen, aus einem metallischen Werkstoff in Form von Seilen verwirklicht werden.

6. System nach einem der Ansprüche 4 oder 5,
dadurch gekennzeichnet, daß sich die Schleifen (14A) in der Nähe des Umfangs (5A,6A) der plattenförmigen Elemente befinden, und dadurch, daß jede Schleife (14A) jeweils an den Platten (5,6) durch Bolzen (17) befestigt ist, die etwa in der kleinen Achse der länglichen Schleife angeordnet sind.

7. System nach einem der obigen Ansprüche 1 bis 6,
dadurch gekennzeichnet, daß die elastischen Aufhängungsorgane (15) Torsionsstäbe (15A,15B,15C) haben, die jeweils so angeordnet sind, daß die Winkelausschläge um die drei Bezugsachsen des Luftfahrzeugs verhindert werden.

8. System nach Anspruch 7,
dadurch gekennzeichnet, daß ein Antiroll-Torsionsstab (15A), ein Antinick-Torsionsstab (15B) und ein Antigier-Torsionsstab (15C) jeweils zur Wirkung um die drei Bezugsachsen vorgesehen sind, wobei die Torsionsstäbe etwa in der gleichen Ebene parallel zu der von der Längs- und der Querachse des Luftfahrzeugs gebildeten Ebene und jeweils im gleichen Abstand zur entsprechenden Bezugsachse des Luftfahrzeugs rechtwinklig zu dieser angeordnet sind.

9. System nach einem der Ansprüche 7 oder 8,
dadurch gekennzeichnet, daß jeder der Torsionsstäbe (15A,15B,15C) einerseits mit Element (5), das an der Struktur (3) des Luftfahrzeugs über Lager (18) befestigt ist, in denen sich die Enden des Torsionsstabs befinden, und andererseits mit dem aufgehängten Element (6), auf dem sich die Ausrüstung (2) befindet, mit Hilfe von zwei Sätzen (19) von zwei Anlenkpleuelstangen verbunden ist, von denen die einen (19A) im Bereich der Enden jedes Torsionsstabes parallel zur entsprechenden Bezugsachse befestigt und die anderen (19B) an Gabelgelenke (20) angelenkt sind, die in senkrechter Richtung am aufgehängten Element (6) befestigt sind.

## Claims

1. Suspension device for linking an on-board equipment item to the structure of a vehicle, such as a rotary wing aircraft, of the type comprising first and second elements capable of being fixed respectively to the said structure and to the said equipment item, and suspension means arranged between the said elements and capable of acting along the three roll, pitch, and yaw reference axes of the said aircraft in order to absorb the linear displacements along the said axes, as well as of acting around the three reference axes in order to absorb the angular displacements, characterized in that:
- the said first (5) and second (6) elements are shaped at least approximately as plates arranged parallel with respect to one another, in a plane formed by the roll and pitch axes of the said aircraft, and forming, with the said suspension means (7), a module; and
- the said suspension means (7) comprise damping members (14), each linked to the first and second elements and capable of absorbing the linear displacements along the said axes, and elastic suspension members (15) separate from the damping members (14) and linked respectively to the first and second elements and capable of absorbing the angular deflections.

2. Device according to Claim 1, characterized in that the said first and second elements (5, 6), between which the said damping members (14) and the said elastic suspension members (15) are provided, are joined together laterally by means of a peripheral flexible joint (9), and wherein, on the outer faces (5B, 6B) of the said first and second elements are provided joints (10, 11) providing, by the use of fixing means, a sealed link between the said outer faces of the elements and, respectively, the structure (3) of the said aircraft and the said equipment item (2).

3. Device according to one of Claims 1 and 2, characterized in that the said damping members (14) are shaped into a plurality of closed loops (14A), contained in planes orthogonal to the plane defined by the said roll and pitch axes and arranged equally distributed in angle with respect to one another around the yaw axis of the said aircraft.

4. Device according to Claim 3, characterized in that the said loops (14A) exhibit an oblong shape, the large axis of which is inclined substantially at 45° with respect to the plane of the said elements, so as to converge towards the structure of the said aircraft.

5. Device according to one of Claims 3 and 4, characterized in that the said loops (14A) defining the said damping members are produced in a metal material, in the form of cables.

6. Device according to either one of Claims 4 and 5, characterized in that the said loops (14A) are close to the periphery (5A, 6A) of the said plate shaped elements, and characterized in that each loop (14A) is fixed respectively to the said plates (5, 6) by bolts (17) arranged substantially along the small axis of the said oblong loop.

7. Device according to any one of preceding Claims 1 to 6, characterized in that the said elastic suspension members (15) comprise torsion bars (15A, 15B, 15C) arranged respectively in such a way as to prevent angular deflections around the three reference axes of the said aircraft.

8. Device according to Claim 7, characterized in that three anti-roll (15A), anti-pitch (15B) and anti-yaw (15C) torsion bars are provided to act respectively around the three reference axes, the said torsion bars being contained substantially in the same plane parallel to that formed by the roll and pitch axes of the said aircraft, and each being arranged orthogonally to and equidistantly from the corresponding reference axis of the said aircraft.

9. Device according to one of Claims 7 and 8, characterized in that each of the said torsion bars (15A, 15B, 15C) is linked, on the one hand, to the said element (5) fixed to the structure (3) of the aircraft, by means of bearings (18) in which are housed the extremities of the bar, and, on the other hand, to the said suspended element (6) bearing the said equipment item (2), by means of two sets (19) of two articulated link rods, of which the first ones (19A) are connected in the vicinity of the extremities of each bar along a direction parallel to the said corresponding reference axis, and of which the other link rods (19B) are articulated to clevises (20) fixed to the said suspended element (6), along a perpendicular direction.
